(19) **Europäisches Patentamt / European Patent Office / Office européen des brevets**

(11) **EP 1 365 526 B1**

(12) **EUROPEAN PATENT SPECIFICATION**

(45) Date of publication and mention
of the grant of the patent:
**23.12.2009 Bulletin 2009/52**

(51) Int Cl.:
***H04B 10/10*** *(2006.01)*

(21) Application number: **02291254.7**

(22) Date of filing: **22.05.2002**

(54) **Method and apparatus for receiving/transmitting an optical signal through the air with a variable fading margin**

Verfahren und Vorrichtung zum Empfäng/zur Übertragung eines freiraumischen optischen Signal mit änderbaren Schwundmargin

Méthode et appareil pour recevoir/transmettre un signal optique en espace libre avec une marge d'évanouissement variable

(84) Designated Contracting States:
**AT BE CH CY DE DK ES FI FR GB GR IE IT LI LU MC NL PT SE TR**

(43) Date of publication of application:
**26.11.2003 Bulletin 2003/48**

(73) Proprietor: **Alcatel Lucent**
**75008 Paris (FR)**

(72) Inventors:
• **Leva, Angelo**
**21040 - Uboldo (Varese) (IT)**

• **Grassi, Elena**
**20052 - Monza (Milano) (IT)**
• **Milani, Renato**
**23900 - Lecco (IT)**

(74) Representative: **Shamsaei Far, Hassan**
**Alcatel Lucent**
**Intellectual Property & Standards**
**54 rue La Boétie**
**75008 Paris (FR)**

(56) References cited:
**JP-A- 09 261 180     US-A- 5 760 937**

EP 1 365 526 B1

**Description**

The present invention relates to the field of wireless transmissions and in particular to the field of optical wireless transmissions. Still more in particular, the present invention relates to a method and apparatus for receiving/transmitting an optical signal through the air with a variable fading margin.

It is widely recognized that the wireless optical telecommunication systems could become an extremely advantageous alternative to both standard optical fiber and microwave radio telecommunication systems mainly for economic and practical reasons but also for the high capacity in stable weather conditions. Very often, in fact, lying optical fibers results in being time consuming, highly expensive or even impossible (just consider, for instance, historic places in old cities and towns). Free space optics systems are also convenient for overcoming emergency situations. A further advantageous use of wireless optical systems is for mobile telecommunication providers that are highly in trouble when they have to find right locations for their infrastructures (the so called problem of site availability).

A typical optical wireless telecommunication system comprises a transmitting apparatus and a receiving one. The transmitting apparatus is based on one or more laser sources whose beam/s, after being duly modulated and filtered by a proper optical system, is directed towards a corresponding remote receiver.

The receiving side comprises one or more apertures focusing the light of the laser beam in a photo-detector or in a multimode fiber linked to the detector.

In other words, the known wireless optical systems use air as transmitting medium (differently from optical fiber systems where optical fibers are used). The behaviour of an optical fiber is generally highly predictable while the behaviour of air as transmission medium is not. In fact, as it is known, air is characterized by high changes according to altitude, latitude, season characteristics,... It results in that the properties of an optical communication channel also depend on meteorological parameters, namely reduced visibility, rainfalls, winds, temperature, as well as system parameters, for instance wavelength, divergence of the laser beam, receiver aperture, distance between receiver and transmitter, etc.

The main natural agents influencing the laser propagation into the troposphere are two, namely:

-    time and space changes of the refractive index n;
-    visibility reductions (resulting in a strong attenuation) due to fog, mist, snow and rainfalls.

The time and space variations of refractive index cause misalignments (due to variations of radius of curvature of the electromagnetic beam) and fast fluctuations of the received signal (due to the combination of field contributions received with random phase). Furthermore, the visibility reductions cause a long and very strong decreasing.

In any case, such effects reduce the optical power that is received at the receiving side for time periods ranging from a few milliseconds to some hours in the worst case.

The known method for overcoming such a reduction of the received signal is to design the whole optical system in such a way that it has a proper power/fading margin. If $P_{TX}$ is the optical power (in dBm) at the focus of the transmitting optics, $L_{OPT}$ are the power losses (in dB) caused by the transmitting and receiving optics to the detector, namely the optical-electrical transducer, $L_{GEOM}$ are the power losses (in dB) deriving from the ratio between the actual receiving area and the beam section at the receiver, and $S_{RX}$ the sensitivity (in dBm) at the receiver, namely the signal threshold under which the signal is not detected by the transducer, the power/fading margin **FM** (in dB) for a given distance, which is available for the attenuations caused by atmospherical events, is calculated as follows:

$$FM = P_{TX} - L_{OPT} - L_{GEOM} - S_{RX} \qquad (1)$$

For a given detector technology (including the receiving area) and for a given Bit Error Rate, sensitivity depends on the transmission bandwidth. In principle, a low sensitivity is appreciated but in this case bandwidth is low. On the contrary, because in principle the object of any transmission system is to have a large bandwidth, the sensitivity will be high (this means that a signal just below a certain high value will not be detected).

As because of certain atmospheric phenomena, the signal level can easily decrease and become close to the threshold, resulting in that data could be lost and the optical link interrupted.

JP 09 261180 discloses a space transmission communication apparatus comprising a transmitter for converting data to an electromagnetic wave signal of a prescribed bit rate and radiating it through space, and a receiver for receiving the electromagnetic wave signal radiated by the transmitter and reproducing it as said data. The apparatus also comprises reception intensity detection means for detecting the reception intensity of said received electromagnetic wave signal, bit rate altering means for altering said transmission bit rate correspondent to the reception intensity, and receiving means for altering either the received bit rate or the receiving operation of said electromagnetic wave signal correspondent to said transmission bit rate altered by said bit rate altering means.

In view of the above, the outstanding problem to solve is to have more fading margin available in an optical wireless system in order to counteract atmospherical phenomena causing the fading of the received power during communication over air by means of laser carriers.

In addition to the above solution consisting in oversizing the optical link in terms of available fading margin, this being expensive and unpractical (as during most of the time the oversized fading margin is not useful), it is known to provide a telecommunication system comprising a laser-on-air system and a standard microwave wireless system. In such an arrangement, when the laser system fails due to meteorological phenomena or other reasons, the high capacity microwave wireless link is operated. This solution works efficiently but has the disadvantage to be highly expensive as the additional radio link should be established (possibly the radio licenses should be reserved). Furthermore, for regulated radio frequencies, bandwidth is drammatically reduced.

The main object of the present invention is to overcome the above problem. This and further objects are obtained by a method and apparatus according to the present invention having the features indicated in independent claims 1 and 8, respectively. Further advantageous characteristics are indicated in the respective dependent claims.

The basic idea of the present invention is to provide a selective method for increasing the fading margin only when it is necessary by slowing down the transmitting and the receiving bit rate, i.e. the laser signal bandwidth. In other words, when the signal level becomes low, the laser signal bandwidth is reduced and the fading margin is correspondingly increased.

The invention will become clear in view of the following detailed description, given by way of example only, to be read making reference to the attached figures, wherein:

- Fig. 1 shows a Free Space Optics system;
- Fig. 2 is a schematic representation of a first embodiment of free space optics transceiver according to the present invention; and
- Fig. 3 is a schematic representation of a second embodiment of free space optics transceiver according to the present invention.

Reference should be made to equation (1) set forth above. For a certain geographic area, the statistics of attenuative events is available. Thus, having fixed the parameters of equation (1), the annual optical link unavailability percentage P% can be calculated. It is clearly desiderable to have such an unavailability percentage as low as possible.

A possible solution to the problem of reducing said percentage **P%** is to decrease the nominal value of the sensitivity $S_{RX}$ at the receiver by acting on the signal bandwidth of the wave incident on the detector. It could be demonstrated that the sensitivity $S_{RX}$ is proportional to such a bandwidth.

Sensitivity of an optical transmitter could be defined as the minimum value of optical power ($P_0$) providing a certain signal-to-noise ratio (S/N) determined by a particular application. In case of transmission through OOK (On-Off Key) modulation and based on the use of an APD (Avalanche Photodiode) receiver, we could say that

$$P_0 = hf_0 R_b (18F + 6(2TKT_L / R_L)^{1/2} / M_q)$$

where:

$f_0$ : signal frequency
$R_b$ : Bit-rate
$F$ : noise digit at the receiver
$K$ : Boltzmann constant
$T_L$ : temperature of the load resistor
$R_L$ : load resistor
$M_q$ : average gain

It is thus realized that sensitivity is proportional to signal bit rate.

Just making some practical examples,

sensitivity for APD at 2,5 Gbit/s: -34 dBm BER $10^{-9}$
sensitivity for APD at 622 Mbit/s: -42 dBm BER $10^{-9}$
sensitivity for APD at 155 Mbit/s: -48 dBm BER $10^{-9}$

In view of the above consideration, the basic idea of the present invention is to provide a dynamic transmitting/receiving system operating according to both the field and meteorological information that is received and able to correspondingly reduce the bandwidth of the signal that is transmitted and received on the same wavelength. This is done by a proper algorithm.

Necessarily, some traffic should be lost and for this reason a decision should be taken in advance about traffic priority. The algorithm takes into account such a priority and, in case the bandwidth should be reduced, only the most privileged information will be transmitted. Low priority traffic will be lost. In any case, the bandwidth reduction results in an increased power margin **PM**.

For instance, in case of a transmission with a regular bit-rate of 2,5 Gbit/s, such a bit-rate could be reduced up to 155 Mbit/s profitably results in a power margin **PM** that is increased by about 14 dB.

Again, the advantage consists in having a non-interrupted link even if the amount of the transmitted information is reduced, in principle up to the system capacity limit. Clearly, the solution according to the present invention provides a further advantage over the prior art arrangements as an exceeding power margin is not allocated for most of the time, thus reducing the design costs.

A further advantage of the present invention is that the complexity of the system is unchanged, differently from backed-up free space optics systems (for instance the above mentioned FSO systems with radio back-up).

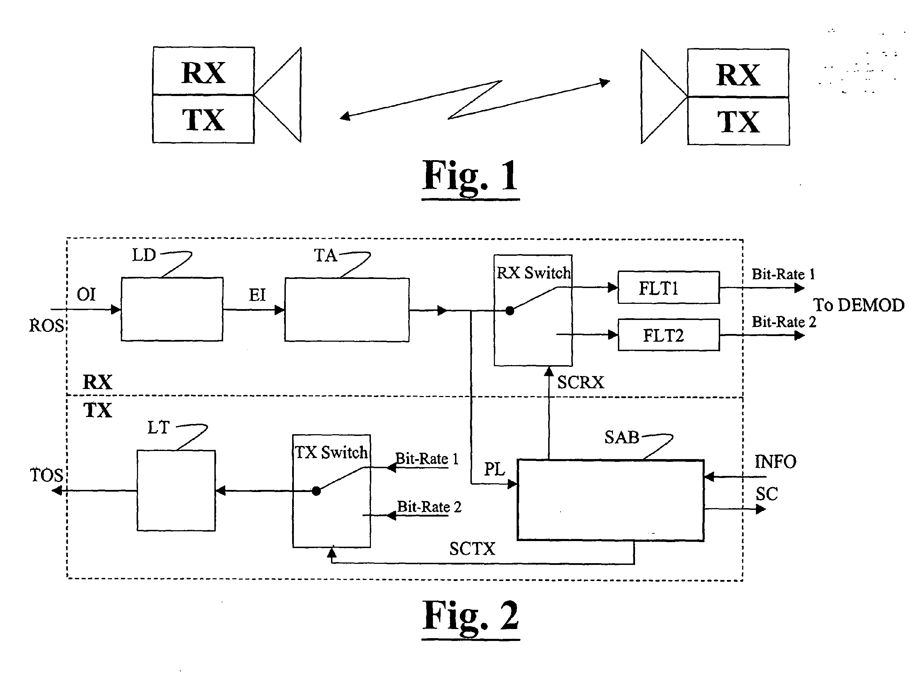

Fig. 1 shows a Free Space Optics (FSO) system. It simply comprises two FSO apparatus, namely a first FSO transceiver and a second FSO transceiver placed at a certain distance one to each other. Each FSO transceiver comprises a Tx side (with a laser transmitter) and an Rx side (with a laser receiver). The laser transmitter transmits laser signals through the air, the laser signals being received at the laser receiver of the corresponding FSO transceiver.

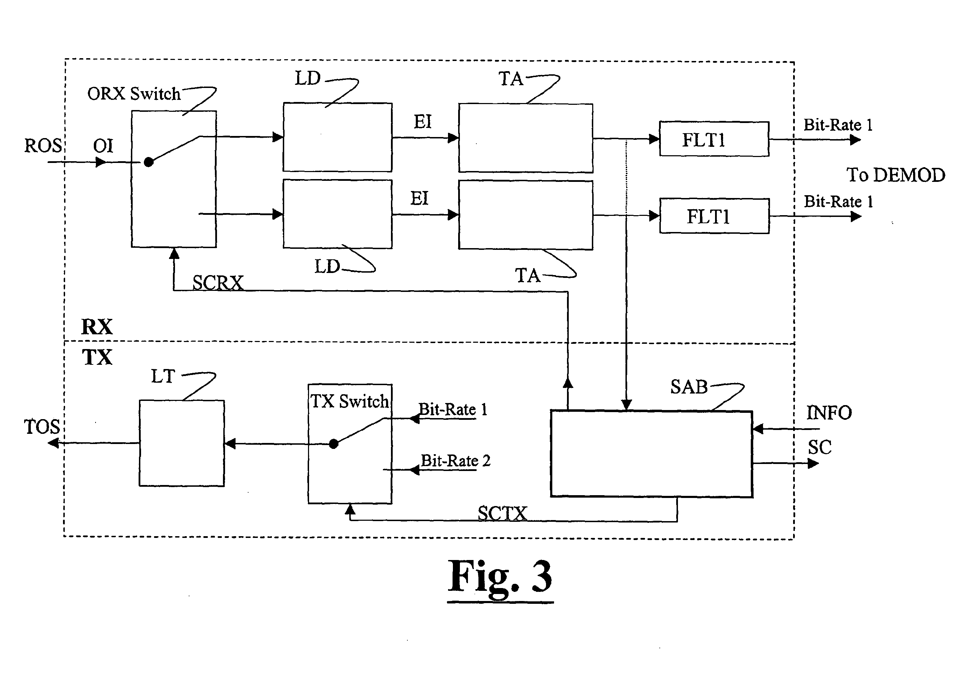

In Fig. 2 a first embodiment of the present invention is shown. Clearly, Fig 2 and Fig. 3 show a FSO transceiver very schematically with the purpose of illustrating the main features of the present invention. Details not directly related to the present invention will not be shown.

The receiving side RX of the embodiment of Fig. 2 comprises an optical interface OI for receiving optical signals ROS transmitted through the air, a laser detector LD for detecting and focusing the laser signal ROS, an electrical interface EI for converting the signal into electrical, a transimpedance amplifier TA for transducing a current into a signal voltage, a RX switch which is fed by the output of the transimpedence amplifier TA, a number of output filters FLT1, FLT2 for producing signals at different bit-rates (Bit-Rate 1, Bit-Rate 2). The signals output from the filters FLT are sent to demodulators DEMOD (not shown) and will be managed as usual.

The transmitting side of the embodiment of Fig. 2 comprises a laser transmitter LT which is fed by a signal at a certain bit-rate of a number of bit-rates, the bit-rate by which the laser transmitter is fed being selected by a TX Switch.

Both the RX and TX switches are driven through a switching algorithm block SAB. In turn, the switching algorithm mainly operates according to the power level PL of the optical signal that is received and to the information from autotracking systems. Power level information PL are derived by the transimpedance amplifier TA and fed to the switching algorithm block SAB for performing a power monitoring. Advantageously, the switching algorithm block receives further information INFO. For instance, such further information INFO relates to link visibility and meteorological conditions possibly decreasing the power level of the signal at the receiving side.

In normal conditions of good visibility and acceptable weather conditions, the transmission bit-rate is, for instance, Bit-Rate 1. If the detected power level becomes lower for any cause (generally not for mis-alignment problems) or the meteorological conditions become bad, the bit-rate is changed to a lower bit-rate, for instance Bit-Rate 2. Preferably, the same bit-rate switching command SC from the switching algorithm block is sent to the RX Switch and to the TX Switch at the very same time because it is assumed that the transmission medium (air) has mutual characteristics in transmission and in reception. This switch operation results in a transmission at a lower bit-rate and in the receiver that is arranged for receiving at such a lower bit-rate.

Naturally, as soon as better weather conditions and/or higher power levels are detected, the bit-rate will be changed back to Bit-Rate 1. It is thus realized that the present invention could be termed as a "co-lambda back-up technique" as the bit-rate switch is operated at the same wavelength.

When the transmission bit-rate is switched to a lower bit-rate (for instance Bit-Rate 2), the output from the transimpedence amplifier TA is sent to the second corresponding filter FLT2 and to common demodulation blocks DEMOD (not shown). Analogously, the laser transmitter LT will receive the signal to be air-transmitted at a lower bit-rate (for instance Bit-Rate 2) from the TX Switch, driven by the switching command SC from the switching algorithm block SAB.

The above switching command SC is also provided out of the transceiver for selecting the information to be transmitted in case of lower bit-rate. In other words, as mentioned above, in case the selected transmission bit rate is lower than the one used in normal conditions, some information could not be transmitted. For this reason, it is requested to decide in advance a certain priority of the information to be transmitted. For instance, there will be high priority information to be transmitted also at the lowest bit-rate; medium priority information to be transmitted at an intermediate bit-rate (together with the high priority information); low priority information to be transmitted at the higher bit-rate (together with both the high and medium priority information). In the example of Fig. 2, as there are provided only two bit-rates, the traffic will be organized in only two priorities: low priority traffic will be sent only when the first bit-rate is selected.

Fig. 3 shows a further embodiment of the transceiver TX/RX according to the present invention. The main difference is in the transmission side and lies in using an optical switch ORX-Switch and a number of different receiving lines that are optimized for a corresponding bit-rate. Thus, the receiving side RX of the embodiment shown in Fig. 1 comprises: an optical interface OI, an optical switch ORX-Switch, a number $n$ of laser detectors LD, a number $n$ of electrical interfaces EI, a number $n$ of transimpedence amplifiers TA and a number $n$ of filters FLT. Conventionally, the output from filters FLT is sent to demodulation blocks (not shown). As in the example of Fig. 2, only two bit-rates are provided and thus $n$ is equal to 2 in the example of Fig. 3.

The transmission side is the same as the one of Fig. 2. In this further embodiment, the switching algorithm block is fed by the same information as in the first embodiment (power level PL of the received signal from any of the transimpedence amplifiers, visibility and meteorological information INFO). The main difference is that it will drive the optical switch ORX-Switch by a switching command SC. Also in this case, the switching command SC is also provided out of the transceiver for selecting the information to be transmitted in case of lower bit-rate.

Herebelow a possible switch criteria will be described in detail. If **$RL_{RX}$** is the received level (in dBm) and **$TE_{RX}$** is the threshold errors in reception (in dBm), **EWT**, namely the early warning threshold (in dBm), will be $EWT = TE_{RX} + EWM$ where **EWM**, the early warning margin, could be 3dB, for instance. If **RL** is the received level in dBm, the possible switch criteria could be: "issuing a switching command and perform a bit-rate switch when $RL < EW$ for a time longer than a certain period". The persistence period of a certain situation before operating the switch is provided in order to avoid useless and frequent changes. An acceptable exemplifying period could be 3 minutes. The period is calculated by a counter that is started as soon as it is detected that $RL < EW$: the start time is set at present time (the time when it is detected the $RL < EW$ condition). If present time - start time is equal to x, then switch is true (the bit-rate is switched), otherwise switch is false (the bit-rate is not switched).

There have thus been shown and described a novel method and a novel free space optics apparatus which fulfills all the objects and advantages sought therefor. Many changes, modifications, variations and other uses and applications of the subject invention will, however, become apparent to those skilled in the art after considering the specification and the accompanying drawings which disclose preferred embodiments thereof. All such changes, modifications, variations and other uses and applications which do not depart from the scope of the invention are deemed to be covered by the invention which is limited only by the claims which follow.

**Claims**

1. A method for receiving/transmitting an optical signal through the air, the method comprising the steps of:

   providing a first free space optics apparatus (RX/TX);
   providing a second free space optics apparatus (RX/TX), the first and second apparatuses being spaced by a distance;
   at the first apparatus, transmitting an optical signal (TOS) through the air at a bit-rate;
   receiving (ROS), at the second apparatus, said optical signal transmitted through the air by the first apparatus;
   measuring the power level (PL) of the received signal (ROS); and
   operating a bit-rate switch for accommodating the bit-rate in order to change the fading margin in the apparatus,

   **characterized in that** the step of operating a bit-rate switch is performed when the received power level is lower than an early warning threshold for a certain pre-determined period of time.

2. The method according to claim 1, **characterized in that** the step of operating a bit-rate switch is performed by a switching algorithm block (SAB) further respondent to visibility, weather and meteorological conditions (INFO).

3. The method according to claim 1 or 2, **characterized in that** the step of operating a switch comprises the step of switching the bit-rate both at the transmission side and the receiving side of the first and second apparatus.

4. The method according to any of preceding claims, **characterized by** the further steps of classifying the signals to be transmitted into at least two classes, the number of classes being correspondent to the number of available switchable bit-rates, each class having a corresponding priority; and transmitting lower priorities signals only when the selected transmission bit-rate is the highest one.

5. The method according to any preceding claims, **characterized in that** the step of operating a bit-rate switch is performed, at the receiving side (RX) of the free space optics apparatus (RX/TX), after an amplifying step (TA) and before a demodulation step (DEMOD).

6. The method according to any preceding claims, **characterized in that** the step of operating a bit-rate switch is performed, at the receiving side of the free space optics apparatus, at an optical interface.

7. The method according to any of claims 1-6, **characterized in that** the early warning threshold is calculated by summing the threshold errors in reception TERX with a predetermined early warning margin EWM.

8. A free space optics apparatus for receiving/transmitting an optical signal through the air from/to a further apparatus being spaced by a distance one to each other, the apparatus comprising:

a receiving side (RX) comprising: an optical interface (OI) for receiving optical signals (ROS); at least a transimpedance amplifier (TA); and a number of filters (FLT), with each filter being adapted to operate at a certain bit-rate;
a transmitting side (TX) comprising a laser transmitter (LT);
switching means for receiving/transmitting with a number of different bit-rates corresponding to the bit-rates of said number of filters (FLT), said switching means being responsive at least to the power level (PL) of the received signal **characterized in that** said switching means are adapted to perform a bit-rate switch when the received power level is lower than an early warning threshold for a certain pre-determined period of time.

9. The apparatus according to claim 8, **characterized in that** said switching means are driven by a switching algorithm block further respondent to visibility, weather and meteorological conditions.

10. The apparatus according to claim 8 or 9, **characterized in that** said switching means comprise:

a switch in the receiving side between the transimpedence amplifier and the filters; and
a switch in the transmission side whose output is fed to the laser transmitter.

11. The apparatus according to claim 8 or 9, **characterized in that** said switching means comprise:

an optical switch in the receiving side at the input optical interface; and
a switch in the transmission side whose output is fed to the laser transmitter.

**Patentansprüche**

1. Ein Verfahren zum Empfangen/Übertragen eines optischen Signals über eine Freiraumverbindung, wobei das Verfahren die folgenden Schritte umfasst:

Bereitstellen einer ersten optischen Freiraumvorrichtung (R)/TX);
Bereitstellen einer zweiten optischen Freiraumvorrichtung (RX/TX), wobei die erste und die zweite Vorrichtung in Abstand voneinander angeordnet sind;
an der ersten Vorrichtung, Übertragen eines optischen Signals (TOS) über die Freiraumverbindung bei einer Bitrate:
Empfangen (ROS), an der zweiten Vorrichtung, des besagten über die Freiraumverbindung von der ersten Vorrichtung übertragenen optischen signals;
Messen des Leistungspegels (PL) des empfangenen Signals (ROS), und
Betätigen eines Bitratenschalters zum Anpassen der Bitrate, um die Schwundreserve in der Vorrichtung zu ändern,
**dadurch gekennzeichnet, dass** der Schritt des Betätigens eines Bitratenschalters ausgeführt wird, wenn der empfangene Leistungspegel für eine vorherbestimmte Zeitspanne niedriger als ein Frühwarngrenzwert ist.

2. Das Verfahren nach Anspruch 1, **dadurch gekennzeichnet, dass** der Schritt des Betätigens eines Bitratenschalters durch einen Algorithmus-Schaltblock (SAB) ausgeführt wird, welcher weiterhin auf die Sichtweite, die Wetterlage und die Witterungsverhältnisse reagiert (INFO).

3. Das Verfahren nach Anspruch 1 oder 2, **dadurch gekennzeichnet, dass** der Schritt des Betätigens eines Schalters den Schritt des Schaltens der Bitrate sowohl an der Sendeseite als auch an der Empfangsseite der ersten und der zweiten Vorrichtung umfasst.

4. Das Verfahren nach einem beliebigen der vorstehenden Ansprüche, **gekennzeichnet durch** die weiteren Schritte des Einstufens der zu übertragenden Signale in mindestens zwei Klassen, wobei die Anzahl der Klassen der Anzahl der verfügbaren schaltbaren Bitraten entspricht, wobei jede Klasse eine entsprechende Priorität aufweist; und **dadurch**, dass Signale niedrigerer Priorität nur dann übertragen werden, wenn die ausgewählte Übertragungsbitrate die höchste ist.

5. Das Verfahren nach einem beliebigen der vorstehenden Ansprüche, **dadurch gekennzeichnet, dass** der Schritt des Betätigens eines Bitratenschalters an der Empfangsseite (RX) der optischen Freiraumvorrichtung (RX/TX) nach einem Schritt des Verstärkens (TA) und vor einem Schritt des Demodulierens (DEMOD) ausgeführt wird.

6. Das Verfahren nach einem beliebigen der vorstehenden Ansprüche, **dadurch gekennzeichnet, dass** der Schritt des Betätigens eines Bitratenschalters an der Empfangsseite der optischen Freiraumvorrichtung an einer optischen Schnittstelle ausgeführt wird.

7. Das Verfahren nach einem beliebigen der Ansprüche 1-6, **dadurch gekennzeichnet, dass** der Frühwarngrenzwert durch Summieren der Grenzwertfehler im Empfang TERX mit einer vorherbestimmten Frühwarnreserve EWM berechnet wird.

8. Eine optische Freiraumvorrichtung zum Empfangen/Übertragen eines optischen Signals über eine Freiraumverbindung von einer weiteren/an eine weitere Vorrichtung, welche in Abstand voneinander angeordnet sind, wobei die Vorrichtung umfasst;

Eine Empfangsseite (RX), umfassend: Eine optische Schnittstelle (OI) zum Empfangen von optischen Signalen (ROS); mindestens einen Transimpedenzverstärker (TA); und eine Anzahl von Filtern (FLT), wobei jeder Filter dazu ausgelegt ist, bei einer bestimmten Bitrate zu arbeiten;
eine Sendeseite (TX) mit einem Lasersender (LT);
Schaltmittel zum Empfangen/Übertragen mit einer Anzahl von verschiedenen Bitraten, welche den Bitraten der besagten Anzahl von Filtern (FLT) entspricht, wobei die besagten Schaltmittel mindestens auf den Leistungspegel (PL) des empfangenen Signals ansprechen, **dadurch gekennzeichnet, dass** die besagten Schaltmittel dazu ausgelegt sind, eine Bitratenschaltung durchzuführen, wenn der empfangene Leistungspegel für eine bestimmte vorherbestimmte Zeitspanne niedriger als ein Frühwarngrenzwert ist.

9. Die Vorrichtung nach Anspruch 8, **dadurch gekennzeichnet, dass** die besagten Schaltmittel von einem Algorithmus-Schaltblock angesteuert werden, welcher weiterhin auf die Sichlweite, die Wetterlage und die Witterungsverhältnisse reagiert.

10. Die Vorrichtung nach Anspruch 8 oder 9, **dadurch gekennzeichnet, dass** die Schaltmittel umfassen:

Einen Schalter an der Empfangsseite zwischen dem Transimpedanzverstärker und den Filtern; und einen Schalter in der Sendeseite, dessen Leistung in den Lasersender eingespeist wird.

11. Die Vorrichtung nach Anspruch 8 oder 9, **dadurch gekennzeichnet, dass** die Schaltmittel umfassen:

Einen optischen Schalter in der Empfangsseite an der optischen Eingangsschnittstelle; und einen Schalter in der Sendeseite, dessen Leistung in den Lasersender eingespeist wird.

**Revendications**

1. Procédé d'émission/réception d'un signal optique à travers l'air, le procédé comprenant les étapes suivantes :

mise à disposition d'un premier appareil optique en espace libre (RX/TX) ;
mise à disposition d'un deuxième appareil optique en espace libre (RX/TX), le premier et le deuxième appareils étant séparés par une distance ;
sur le premier appareil, émission d'un signal optique (TOS) à travers l'air à une débit binaire ;
réception (ROS), sur le deuxième appareil, dudit signal optique émis à travers l'air par le premier appareil ;

mesure du niveau de puissance (PL) du signal reçu (ROS) ; et
commande d'un commutateur de débit binaire pour adapter la débit binaire afin de modifier la marge d'évanouissement dans l'appareil,

**caractérisé en ce que** l'étape de commande d'un commutateur de débit binaire est réalisée lorsque le niveau de puissance reçue est inférieur à un seuil de préalerte pendant une certaine période prédéterminée.

2. Procédé selon la revendication 1, **caractérisé en ce que** l'étape de commande d'un commutateur de débit binaire est réalisée par un bloc d'algorithme de commutation (SAB) qui réagit en outre aux conditions de visibilité, climatiques et météorologiques (INFO).

3. Procédé selon la revendication 1 ou 2, **caractérisé en ce que** l'étape de commande d'un commutateur comprend l'étape de commutation de la débit binaire à la fois du côté de l'émission et du côté de la réception du premier et du deuxième appareils.

4. Procédé selon l'une quelconque des revendications précédentes, **caractérisé par** les étapes supplémentaires suivantes : classification des signaux à émettre en au moins deux catégories, le nombre de catégories correspondant au nombre de vitesses de transmission commutables disponibles, chaque catégorie possédant une priorité associée ; et émission des signaux aux priorités inférieures seulement lorsque la débit binaire sélectionnée est la plus élevée.

5. Procédé selon l'une quelconque des revendications précédentes, **caractérisé en ce que** l'étape de commande d'un commutateur de débit binaire est réalisée, du côté récepteur (RX) de l'appareil optique en espace libre (RX/TX), après une étape d'amplification (TA) et avant une étape de démodulation (DEMOD).

6. Procédé selon l'une quelconque des revendications précédentes, **caractérisé en ce que** l'étape de commande d'un commutateur de débit binaire est réalisée, du côté récepteur de l'appareil optique en espace libre, au niveau d'une interface optique.

7. Procédé selon l'une quelconque des revendications 1 à 6, **caractérisé en ce que** le seuil de préalerte est calculé en totalisant les erreurs de seuil en réception TERX avec une marge de préalerte EWM prédéterminée,

8. Appareil optique en espace libre pour recevoir/émettre un signal optique à travers l'air de la part/vers un autre appareil qui est séparé d'une distance donnée, l'appareil comprenant :

   un côté récepteur (RX) comprenant : une interface optique (OI) pour recevoir des signaux optiques (ROS) ; au moins un amplificateur à transimpédance (TA) ; et un nombre donné de filtres (FLT), chaque filtre étant adapté pour fonctionner à une certaine débit binaire ;
   un côté émetteur (TX) comprenant un émetteur laser (LT) ;
   des moyens de commutation pour recevoir/émettre à un nombre donné de vitesses de transmission différentes correspondant aux vitesses de transmission dudit nombre donné de filtres (FLT), lesdits moyens de commutation réagissant au moins au niveau de puissance (PL) du signal reçu, **caractérisé en ce que** lesdits moyens de commutation sont adaptés pour réaliser une commutation de la débit binaire lorsque le niveau de puissance reçu est inférieur à un seuil de préalerte pendant une période prédéterminée.

9. Appareil selon la revendication 8, **caractérisé en ce que** lesdits moyens de commutation sont commandés par un bloc d'algorithme de commutation qui réagit en outre aux conditions de visibilité, climatiques et météorologiques.

10. Appareil selon la revendication 8 ou 9, **caractérisé en ce que** lesdits moyens de commutation comprennent :

    un commutateur du côté de la réception entre l'amplificateur à transimpédance et les filtres ; et
    un commutateur du côté de l'émission dont la sortie est acheminée à l'émetteur laser.

11. Appareil selon la revendication 8 ou 9, **caractérisé en ce que** lesdits moyens de commutation comprennent :

    un commutateur optique du côté de la réception au niveau de l'interface optique d'entrée ; et
    un commutateur du côté de l'émission dont la sortie est acheminée à l'émetteur laser.

Fig. 1

Fig. 2

**Fig. 3**

EP 1 365 526 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9261180 A